# EUROPEAN PATENT SPECIFICATION

(11) **EP 2 680 153 B1**
(45) Date of publication and mention of the grant of the patent: **12.08.2015**
(21) Application number: 12174388.4
(22) Date of filing: 29.06.2012
(51) Int. Cl.: G06F 13/16

(54) **Method and device for correcting a phase shift in a time synchronised system**
Verfahren und Vorrichtung zur Berichtigung einer Phasenverschiebung in einem zeitsynchronisierten System
Procédé et dispositif pour corriger un décalage de phase dans un système synchronisé dans le temps

(43) Date of publication of application: 01.01.2014
(73) Proprietor: Technische Universität Darmstadt, 64285 Darmstadt (DE)
(72) Inventor: Hofmann, Klaus, 64291 Darmstadt (DE); Jaiswal, Ashok, 64295 Darmstadt (DE); Yuan, Fang, 64283 Darmstadt (DE)
(74) Representative: Stumpf, Peter

(56) References cited:
- WO-A1-2011/077573
- US-A1- 2008 201 597

## Description

The invention relates to a method for correcting a phase difference in a time synchronised data transfer system. The invention also relates to a phase delaying unit for correcting a phase difference in a time synchronised data transfer system. Furthermore the invention relates to a digital device comprising a data transfer system.

In nowadays digital electronics, data has to be transferred between various units frequently. The transfer of data not only has to be performed between different units (for example between different computers or workstations in a computer network or in a computer cluster), but also between subunits inside a single unit. As an example for the latter, computer buses that are used to transfer data between the CPU (central processing unit), the electronic memory (usually RAM = random access memory), a graphics card, a hard disk drive etc. can be mentioned. However, the necessity for a data transfer does not stop at this level, but even goes beyond.

As an example, even within a computer memory board or on the graphics card itself, a huge amount of data transfer has to be performed. As an example, nowadays computer memory systems are typically divided into a memory controller serving a plurality of memory chips using a 32 bit data bus (or an even wider data bus). Hence, a data transfer at an appropriate data transfer rate has to be provided for the communication between the respective memory controller chip and the memory chips themselves. Another example is the communication between GPUs (graphic processing units) and the graphic data memory chips (typically all arranged on a computer graphics card or a computer video card).

Depending on the devices to be coupled together (i.e. on the actual application) and particularly based on economical considerations, an appropriate maximum data transfer rate has to be chosen. As a rule of thumb, a good compromise between a data rate that is as high as possible (for performance reasons) and a resulting data transfer device that is as cheap as possible (and hence typically slow with respect to maximum data transmission rate) has to be chosen. A good compromise will be typically based on the application. While a data transfer between two computers with a data transfer rate of 10 Mbit/sec may be more than enough for standard applications, such a date transfer rate will be way too low for a data transfer between a CPU and an electronic memory unit and/or within an electronic memory module.

In general, data transfer protocols can be divided into synchronous data transfer protocols and asynchronous data transfer protocols.

Roughly speaking, asynchronous data transfer protocols are typically cheaper to implement and have the advantage that different units with a strongly varying design and performance can be connected to each other. The big drawback of asynchronous computer protocols is their comparatively slow speed which is in part based on the amount of a data transfer that is required for the handshake protocol. The big advantage is the typically comparatively low hardware requirements, and that typically comparatively few cables have to be used for interconnecting the respective units with each other. A typical example for asynchronous data transfer protocols are the Ethernet, LAN (local area networks) and/or DSL connections (DSL = digital subscriber line). It has to be noted that even here usually a synchronisation is done. However, if such a synchronisation is performed, this is usually done on a frame level, and not on a clocking signal level.

On the other side, there are the synchronous data transfer protocols. Typically, when using synchronous data transfer protocols the resulting data transfer rates are significantly higher as compared to asynchronous data transfer methods. This is of course a big advantage. As a drawback, the hardware requirements are higher. In particular, quite often several clocking signals have to be provided and/or usually a comparatively high number of connecting wires are used and/or very high frequencies have to be used for data transfer. Furthermore, the units that are connected with each other by a synchronous data connection usually have to have a somewhat similar performance. A typical example for the use of synchronous data transfer methods are computer buses within a computer and/or the data transfer that is performed between a memory controller and the memory storage chips and/or a GPU and graphic memory chips.

Another general aspect to be considered with data transfer units is their power consumption. Let's take the example of a data communication between two connected units. For illustrative purposes, let's have a look at a data transfer that is effectuated between a memory controller (serving as a master) and the memory storage chips (working as slaves) in a GDDR5-memory system . Here, a main clocking signal of one GHz (basic frequency) is used. This frequency is used for transmitting commands and addresses over a respective data transfer line. However, the "real" data transfer (i.e. the data that is read out of and/or that is written into the indicated address) is transferred based on a second clocking signal (thewrite clocking signal or forward clocking signal, typically abbreviated as WCK) where the second clocking signal typically runs at a frequency, twice as high as the main clocking signal (typically abbreviated as CK or CLK). Moreover, a data bit is usually not only transmitted on a rising flank of the WCK signal, but also on a falling flank of the WCK signal. This way, a data transfer rate of 4 Gbit/sec. can be realised (typically transferred on a dedicated data transfer line (usually abbreviated as DATA or DQ).

Running electronic switches (like transistors on an integrated circuit) at high frequencies usually requires a substantive amount of energy. This not only brings up the problem of providing energy for the electronic units themselves, but also for cooling devices to remove the waste energy and to thus avoid overheating. This problem becomes even more significant (usually by a factor in the order of 5 to 10), if analog electronic switches are used. Additionally, analog switches are typically significantly larger as compared to digital switches.

A particular problem for systems running at different clocking signals (like the GDDR5-standard) is the problem of phase delays. Typically, signals that are transferred at the basic frequency (CK signal; for example addresses and commands) result in a certain phase shift when being processed on the slave side and/or during the data transfer itself. However, signals being transferred at a higher frequency (e.g. the WCK signal frequency; for example "real" data) will result in a different phase shift at the receiving side. To avoid data errors, this phase shift has to be compensated.

One possible way would be to define a certain allowed value for the phase shift between the two clocking signals (CK/WCK). While this approach is possible in principle (for example it is employed for the XDR2-memory standard by the company Rambus), this approach is undesirable because it restricts the manufacturer to certain designs. In reality, this leads to a significantly reduced amount of manufacturers that can fulfil this standard and/or that are certified for this standard. This will typically lead to comparatively high prices. This might be the reason why the XDR2-memory has only a very low market share.

Another possibility is to allow a wide range of phase shifts on the slave side and to provide a mechanism to adjust the phase shift on the transmitter side in a way that the two signals are in a certain phase state relative to each other. This approach is chosen in the current GDDR5-standard according to JEDEC-standard 8 - 20, JEDEC-standard 8 - 21 and JEDEC-standard 212. Here, a dedicated signal line is used that transmits binary information indicating that either the data clock (WCK) is early as compared to the internal clock (CK), in which case a "1" is transmitted, or whether the data clock signal (WCK) is late with respect to the clock signal (CK), in which case a "0" is transmitted. This signal (typically abbreviated as EDC for Error Detection and Correction) is usually transmitted at the CK rate.

With present computer controllers the EDC data is typically interpreted by an oversampling method, i.e. at twice the frequency of the EDC frequency. Then, a "majority vote" is used, so that the phase shift is readjusted to either an increased or a decreased phase shift depending on the EDC data. If the "majority vote" is undecided on the average (i.e. equal number of 1's and 0's), the correct phase shift is chosen; hence the phase adjusting device remains at the currently set level. For adapting the phase shift, typically analog transistors with in a phase interpolator circuit are chosen as phase adjuster devices. This phase adjuster shifts the phase of the data PLL output signal, i.e. the phase of the WCK signal with respect to the CK signal (generated by the "main" PLL; PLL = phase locked loop). The phase adjuster is able to adjust the phase shift in both directions depending on whether the WCK signal is late or early with respect to the CK signal.

A big advantage of this design is that the training cycle (i.e. the cycle used for synchronising the two (or even more) signals) is very short. However, the use of analog electronic devices is quite power consuming (in particular at high frequencies). Also, analog devices use a substantive amount of area on the chips surface. It has to be noted that up to 25 % of the overall power consumption of a memory system goes into this phase shifting. Despite of this well-known disadvantage, no convincing solution has been proposed so far.

In WO 2011/077573 A1 a signal receiving circuit is disclosed that receives a signal from a memory module or another signal source. The signal receiving circuit comprises a phase detection unit and a latency control unit. The latency control unit further comprises a first (phase) latency unit and a second (phase) latency unit. The first latency unit receives the detected phase difference, and introduces latency into the phase of the received signal within a range not exceeding a degree of latency designated in units of a prescribed phase difference. If the phase difference exceeds the prescribed phase difference, the second latency unit changes the degree of latency of the received signal, designated in units of the prescribed phase difference.

Therefore, there is a significant need for an improved method for correcting a phase difference in a time synchronised system as well as for improved phase delaying units.

It is therefore the object of the invention to provide a method for correcting a phase difference in a time synchronised system that is improved over presently known methods for correcting a phase difference in a time synchronised system. It is another object of the invention to propose a phase delaying unit that is improved over presently known phase delaying units. It is yet another object of the invention to provide a digital device that comprises a synchronised data transfer system, in particular a digital memory unit that is improved over presently known digital devices.

The invention solves these objects.

It is suggested to perform a method for correcting a phase difference in a time synchronised data transfer system that comprises a main clocking signal and at least a data transmission signal, wherein a phase difference between said main clocking signal and said data transmission signal is detected and consecutively corrected in a way that the phase difference is corrected by a phase shift in a single direction, wherein the amount of the phase shift correction is digitally incremented. The inventors have found that by using this idea, it is surprisingly possible to simplify the devices necessary for performing the method, usually even significantly. In particular, it is possible to replace some or even all of the presently used analog devices by digital devices. This way, it is possible, for example, to replace an analog phase shifter by a digitally operating phase incrementer unit and/or by using digitally controllable (and usually digitally operating) PLL circuits. Simply by replacing (some of the) analog by digital devices, a significant decrease in energy consumption and/or space can usually be achieved. Additionally and/or alternatively it is usually possible to avoid any kind of oversampling for employing this method. However, by reducing the frequency at which (some of the) devices have to be operated, usually another significant reduction of energy consumption can be realised. In particular, the reduction in energy consumption is usually particularly considerable, since the respective devices usually operate at a very high frequency (for example in the GHz range or close to it). It should be noted that the energy consumption and the size reduction not only occurs "directly", but also "indirectly" since less energy for cooling and/or less space for the dissipation of waste heat has to be provided. Using a digital increment, one can use digital components for pretty much all units needed. This can result in a particularly energy-efficient and/or small overall device (for example a controller chip for a memory system of an electronic memory). Admittedly, the suggested method has usually the disadvantage that a training cycle for synchronising the system takes somewhat longer as opposed to presently used methods. Furthermore, in particular a retraining cycle can be comparatively lengthy with respect to the standard method. However, it should be noted that even with the presently proposed method a training (retraining) cycle can usually be finished within a 200 ms interval (or sometimes even less). Therefore, the time loss is usually rather insignificant under normal circumstances (were a retraining might be necessary every couple of minutes or so). The notion "time synchronised system" relates in particular to a synchronous data transfer. Usually, the internal clocking of the connected systems is operating synchronously as well (which, however, is not a requirement). Furthermore, it should be noted that the phase difference does not necessarily has to be set to zero. Instead, a different value might be desirable. In other words, the correction of the phase difference not only includes a method to set the phase difference to zero, but particularly includes a method for setting the phase difference to a desired value. The desired value can be particularly chosen in a way to serve the necessities of a slave component that is commanded by a master component. Typically, the master component comprises a device for generating at least one clocking signal, in particular at least a main clocking signal.

It is suggested to perform the method in a way that a plurality of data transmission signals are used, wherein the data transmission signals are preferably taken from the group comprising address signals, command signals, error detection signals, additional clocking signals, writing data signals and/or reading data signals. However, it should be stressed that this is not an exhaustive list. Hence, other signals might be used alternatively and/or additionally. First experiments have shown that the method can be particularly advantageously employed with such signals. This is particularly true, if the method is used at least in part in connection with electronic memory devices.

Furthermore it is preferred that the method is performed in a way that at least one data transmission signal as an additional clocking signal, in particular a clocking signal with a different frequency as compared to the main clocking signal, wherein more preferred at least two clocking signals differ from each other by an integer factor. This way, a gradual continuous phase shifting between two clocking signals can usually be avoided. In particular, the difference between at least two clocking signals can be an even number. As explicit examples, a factor of two, three, four, five, six, seven, eight, nine and/or ten can be used. Of course, the respective reciprocal number can be used as well (not necessarily only for the examples given explicitly). In particular, a factor of two and/or four is particularly relevant when it comes to a method for synchronising memory parts, in particular different parts of a DDR-memory system (most particularly a GDDR5-memory system).

According to another preferred embodiment of the method, at least one data transmission signal is a dedicated phasing data line, indicating a phase difference between the main clocking signal and the at least one data transmission signal, in particular indicating whether the data transmission signal is late or early with respect to the main clocking signal and/or with respect to another data transmission signal. This design is of a particular relevance, since even presently synchronised data transfer systems quite often comprise such a dedicated phasing data line. For example, this is present with present DDR-standards, in particular with present GDDR5-standard. Using such an embodiment can therefore make the presently suggested method suitable as a "drop in" solution. Therefore, this method can (at least partially) be used together with the already present standard components, which can make the acceptance and cost effectiveness of the method very high. It should be noted that a dedicated phasing data line can be used as a dedicated phasing data line only during certain times, for example only during a training (and/or retraining) cycle. During other times (in particular during normal operation of the system), the dedicated phasing data line can be used for different purposes as well, for instance for transmitting error detection signals or the like. However, it should be noted that such error detection signals can be understood as some kind of a "continuous phasing data line" in the meaning that by such a signal the continuous validity of the phasing can be verified (although other errors might be transmitted by such a line as well).

It is further suggested to perform the method in a way that the phase correction is determined by a changeover of a phasing data signal, in particular by the changeover of a phasing data signal on a dedicated phasing data line. Since according to the presently suggested method a phase shift only occurs in one direction, it is sufficient to look for such a changeover. As an example, a phasing data signal might consist of "1's" for an additional timing signal (for example a WCK signal in a memory device) that is early with respect to a main clocking signal. Now the phase difference is continuously increased for the additional clocking signal. At some point the additional clocking signal will change to a "late state". Now the phasing data signal changes over to "0's" only. This way it is known that the phase difference has been readjusted to a value that is approximately the "correct" value (although in reality it will be usually a little bit late; this, however, is normally not of a problem because some deviations are permitted anyhow; in particular, according to present standards for synchronised data transfer systems, some jitter has to be allowed). This embodiment makes it particularly easy to use a comparatively low sampling rate for checking the phasing data signal. In particular, usually no oversampling has to be done anymore (which is the present standard design). Usually, it is sufficient (and preferred) to set the sampling rate at the same frequency as the clocking frequency of the faster clock signal (presumably even only to the lower clock rate). In particular a digital shift register can be used for detecting such a changeover.

According to another preferred embodiment of the method, an averaging method is used for determining the current phase shift, in particular for determining a changeover of a phasing data signal. Even in digital electronics, sometimes a bit with a "wrong value" can occur. It is therefore desired that such a wrong bit does not "spoil" the overall phase shift adaption method. Therefore, it is possible to use some averaging methods. As an example, if a stream of "1's" and "0's" of the previously described type is used as a phasing data signal, these bits can be grouped into groups of three bits each. Now, the majority of bits in each group determines the value of the "full group". This can make the presently suggested method even more robust.

Furthermore, it is suggested to perform the method in a way that the measurement of the phase shift is done at essentially the same frequency as the main clocking signal and/or as at least one data transmission signal. This way, oversampling can be avoided (as already previously mentioned). This can make the system particularly energy-efficient and/or particularly small in size. In particular, the resulting device can be particularly simple, since no additional clocking signals have to be generated and/or used.

It is furthermore suggested to perform the method in a way that the method (i.e. the phase correction method) is only performed during a training cycle. Such a training cycle will usually be performed when the respective device is powered up. However, it is also possible to use such a training cycle if a certain amount of errors occurs, in particular errors that can be associated with an incorrect phase shift setting. Even here, some kind of an averaging method can be used, so that a single error once in a while does not trigger a training cycle. In particular a training cycle somewhat after the powering up can be referred to as a retraining cycle. Usually, a (re-)training cycle will be started by a "start training" signal and/or ended by an "end training" signal.

According to a particular preferred embodiment, the method can be performed in a way that the phase difference correction can be repeated and/or in particular that a training cycle can be repeated. This way, a gradual phase shift due to temperature differences (that can occur due to the waste heat generated during operation) or some other effects, can be foreseen in the design of the method. In particular, if a data error rate will be beyond a certain limit, such a resetting can be performed. Additionally and/or alternatively it is possible that such a resetting is performed once in a while, at least within some time interval after a start-up of the device. As an example, in the first fifteen minutes of operation, a resetting of the phase difference can be done every minute. After those fifteen minutes, a retraining will only be done if a certain error rate is exceeded.

According to a particular embodiment of the method, the direction of the phase shift is determined at the beginning of the phase correction. The decision can be made with respect to some data. The data can be, as an example, a measurement value of the (initial) phase shift and/or additional information, like temperature or the like. It is also possible to simply use the time that was necessary for the last training and to determine from this time (that can be stored somewhere, in particular in a non-volatile memory register) whether the last training cycle was performed in a "good" or "bad" direction. Also, a check can be used whether last time a "wrong" changeover of an error detection signal was detected. This way, the training cycle can usually be shortened. This embodiment is particularly useful if it is used in connection with a system that has a phase interpolator based PLL (which is already the case for some commercially available components, in particular for some commercially available electronic memory components) that can be shifted in two directions.

According to another preferred embodiment of the method, the amount of the phase shift correction is digitally incremented at steps that are smaller than a maximum jitter offset that can be tolerated. Preferably, the steps used for phase correction are significantly smaller than the maximum jitter offset. For example they can be smaller than 1/5, 1/10, 1/20, 1/30, 1/40 or 1/50 of the maximum jitter offset. This way, a good compromise between a "well tuned" system and an acceptable training interval length can be realised.

It is particularly preferred to employ the method for synchronising a memory controller and a memory unit, in particular of a DDR-memory type (DDR = double data rate memory; usually DDR-SDRAM for double data rate synchronous data random access memory). In particular with nowadays technology, the method is particularly well-suited for this purpose. However, it can also be used for different purposes. In particular, in future applications the presently proposed method might prove to be particularly advantageous for other arrangements.

Furthermore, a phase delaying unit is suggested wherein the phase delaying unit is designed and arranged in a way to perform at least at times a method as described above. This way, the phase delaying unit can show the same features and advantages as previously described, at least in analogy. Furthermore, the phase delaying unit can be adapted according to the previously made suggestions, at least in analogy.

In particular, it is possible to design the phase delaying unit in a way that it comprises at least one shift register unit and/or at least one comparator unit and/or at least one delay phase increment unit and/or at least one phase interpolator based PLL. First experiments have shown that a design, using one or several of the suggested units is particularly advantageous. However, it is clear that the given list is not an exhaustive list, i.e. that additionally and/or alternatively other units can be employed as well.

Furthermore, a digital device is suggested that comprises at least one phase delaying unit according to the previous description and/or that is designed and arranged in a way to perform at least at times a method according to the previously suggested method. This way, the resulting digital device can show the same features and advantages as previously mentioned, at least in analogy. Furthermore, the digital device can be modified according to the previously made suggestions, at least in analogy. In particular, the digital device can be designed as a digital memory unit. In particular, the digital memory unit can comprise a digital memory controller and/or a digital memory chip. If both are used, in particular a so-called memory system can result.

The present invention and its advantages will become more apparent, when looking at the following description of possible embodiments of the invention, which will be described with reference to the accompanying figures, which are showing:
- Fig. 1:: the schematic circuitry of a memory system with a memory controller and a memory chip according to a first embodiment of a communication system;
- Fig. 2:: an illustration of phase shift relations according to a possible embodiment;
- Fig. 3:: a first embodiment of a phase delay generating unit in a schematic drawing;
- Fig. 4:: a second embodiment of a phase delay generating unit in a schematic drawing;
- Fig. 5:: a third embodiment of a phase delay generating unit in a schematic drawing;
- Fig. 6:: a fourth embodiment of a phase delay generating unit in a schematic drawing;
- Fig. 7:: a fifth embodiment of a phase delay generating unit in a schematic drawing;
- Fig. 8:: an embodiment of a method for correcting a phase delay in a flowchart;
- Fig. 9:: a second embodiment of a communication system in a schematic drawing;
- Fig. 10:: a third embodiment of a communication system in a schematic drawing.

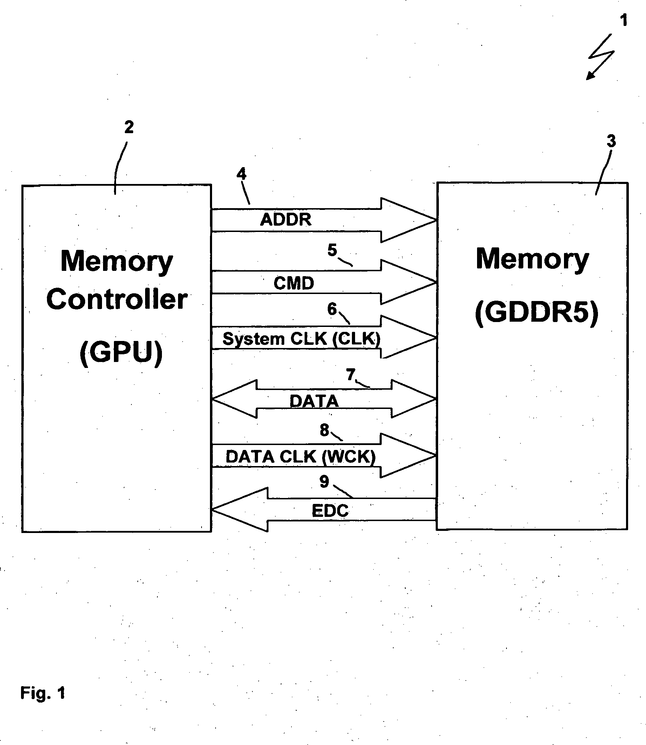

In Fig. 1 a schematic drawing of a typical example of a memory system - presently a GDDR5-system 1 - according to JEDEC-standard is shown (GDDR = graphical double data rate memory). The GDDR5-system 1 comprises a memory controller 2 (as a transmitter) and a GDDR5-memory 3 (as a receiver). The memory controller 2 and the memory 3 are connected by a variety of channels 4, 5, 6, 7, 8, 9. Some of the channels are unidirectional (channels 4, 5, 6, 8, 9) while presently one channel 7 is bidirectional. In more detail, there is an address channel 4 (ADDR) for transmitting address data from the memory controller 2 to the memory 3; a command channel 5 (CMD) for transmitting commands from the memory controller 2 to the memory 3, a system clock channel 6 (CLK) for transmitting a clocking signal from the memory controller 2 to the memory 3, a data clock channel 8 (WCK) for transmitting a second clocking signal from the memory controller 2 to the memory 3, an error detection signal 9 (EDC) for transmitting error signals and phasing information from the memory 3 to the memory controller 2 and a (bidirectional) data channel 7 (DATA) for transmitting data that is read out of the memory 3/written into memory 3 by the memory controller 2.

As implemented in the GDDR5-standard according to JEDEC specifications, the system clock 6 runs at a first frequency (for example 1 GHz). The data clock 8 runs at double frequency, i.e. presently at 2 GHz. The data on the data channel 7 is not only transmitted at a rising, but additionally at a falling flank of the data clock signal 8, therefore data bits are transmitted on the data channel 7 at a rate of 4 GHz (i.e. at a transmission rate of 4 Gbps or 4 Giga bits per second).

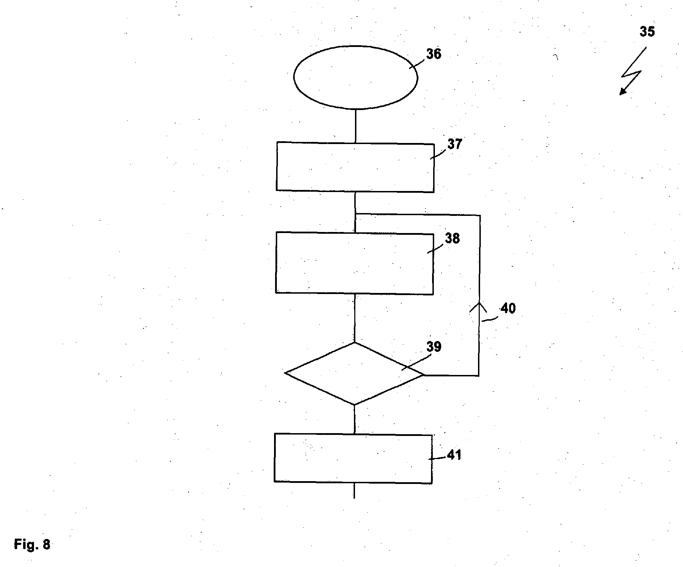

Depending on the actual memory chips 3 and/or the memory controller chips 2 used, a phase difference 51 can occur between the system clock signal 6 and the data clock signal 8. If the phase difference 51 exceeds a certain amount, no communication can be established anymore between the memory controller 2 and the memory 3. Such a phase shift cannot only occur during operation (for example due to temperature changes due to ambient conditions and/or due to waste heat), but varies by experience between chips from different manufacturers significantly. Therefore, when powering up the GDDR5-system 1, a method (see also Fig. 8) for setting the phase difference 51 between the system clock 6 and the data clock 8 to a correct value has to be performed. This method is usually referred to as a training phase. Here, only a training phase for "training" the relationship between system clock 6 and data clock 8 is described. In "reality" different training phases for different purposes are usually employed. Usually, the training phase will not only occur when powering up the GDDR5-system 1, but also once in a while during operation, in particular at certain time intervals and/or if a certain error data rate is exceeded. Error detection messages can be transmitted via the error detection signal line 9 and/or by parity bits (or other error detection schemes) by the data channel 7. Of course, other methods are possible as well.

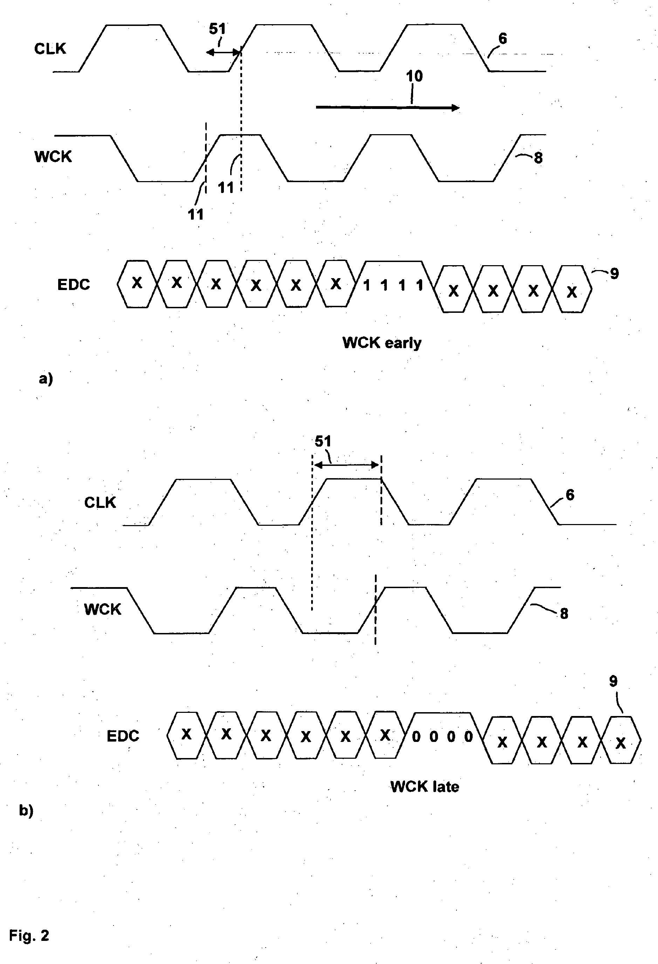

During training phase, the memory 3 sends back alignment information to the memory controller 2 via the error detection signal channel 9. The signal on the error detection signal channel 9 consists of "1's" and "0's", depending on whether the data clock signal 8 is early or late with respect to the clock signal 6. This is shown in Fig. 2. In the present embodiment, the error detection signal 9 consists of "1's" if the data clock signal 8 is early (situation in Fig. 2a), while the error detection signal 9 consists of "0's", if the data clock signal 8 is late (situation in Fig. 2b).

As indicated in Fig. 2a, according to the presently proposed method, the phase shift of the data clock 8 is only changed in a single direction, as indicated by phase shift direction arrow 10. (Of course, it is equally possible that the direction of the phase shift is opposite, that the phase of the system clock 6 is changed and/or the like). The phase shift 10 is performed in small increments that are sufficiently small to not "overshoot" the "ideal" phase difference too much.

If the phase of the data clock signal 8 is slowly incremented ("moving to the right" in Fig. 2), at some point the data clock signal 8 and the system clock signal 6 will be aligned to each other. This occurs if, for example, the midpoints of the rising flanks 11 of both of the data clock signal 8 and the system clock signal 6 align to each other. Due to the fact that the phase delay is incremented in small, but finite steps, in "reality" the situation will change in a way that there is a change between "slightly early" to "slightly late". Due to this changeover from early to late, the error detection signal 9 will correspondingly change from "continuous 1's" to "continuous 0's". If this changeover of the error detection signal 9 occurs, the phase shifting process 10 will be stopped. As it is clear, this will create a point where the data clock channel 8 and the system clock channel 6 are very close to being ideally adapted to each other. The slight misalignment by the overshooting is not a problem (provided that the increments were sufficiently small), since in real world electronics a jitter of all digital signals occurs anyhow (and the respective devices have to have a tolerance against such misalignments, anyhow).

It should be noted that this "shifting in positive direction 10" is possible in any case, even if the training process starts at a situation where the data clock 8 is late with respect to the system clock 6, as shown in Fig. 2b. In this case, a phase shift towards "late" of the data clock channel 8 will first increase the phase difference 51. Nevertheless, the error detection signal 9 will remain the same (presently "0's"). At some point a continuous series of "1's" will occur (where the changeover will be neglected, since it is a changeover in the wrong direction). Then, we are at the situation as shown in Fig. 2a and the method will continue as previously described. The possibility for doing this is of course connected to the fact that both the CK signal and the WCK signal are periodic.

Once the training cycle is completed (i.e. the data clock signal 8 and the system clock signal 6 are aligned to each other), a training stop signal will be transmitted and the training phase ends (at least the training phase with respect to the alignment of the data clock signal 8 and the system clock signal 6).

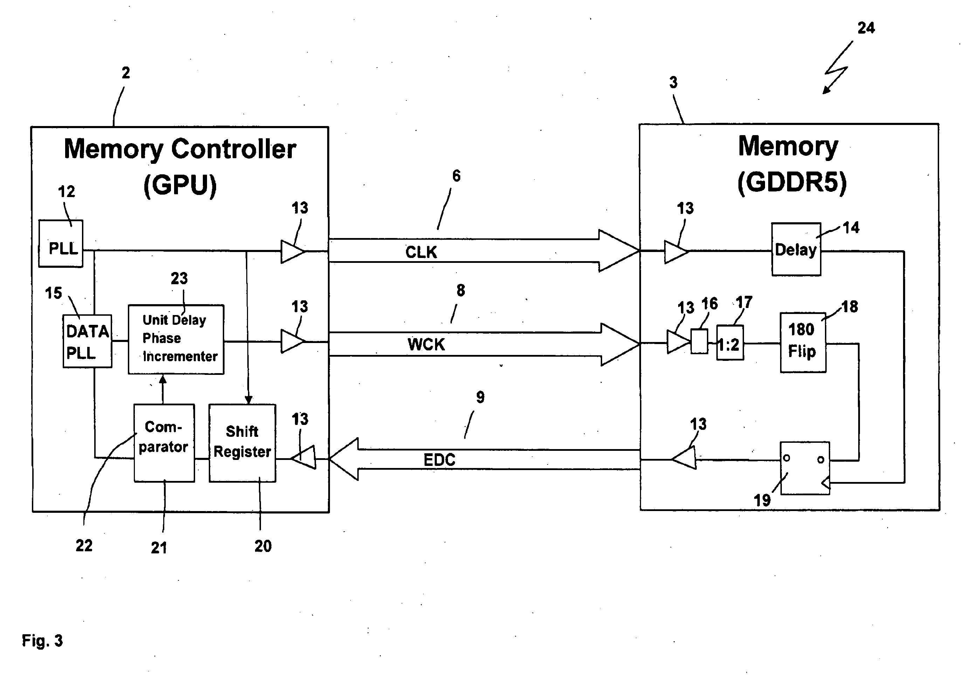

In Fig. 3, a first embodiment of a suitable hardware for performing the suggested phase adaption method is shown in a schematic drawing. For illustrative purposes, only a selection of relevant channels is shown, namely the system clock channel 6, the data clock channel 8 and the error detection signal channel 9. (This will be done - at least in analogy - in the following Figs. as well.)

Within the memory controller 2, the system clock signal 6 is generated by a PLL circuit 12 (PLL = phase locked loop). The signal is sufficiently amplified by an amplifier 13 (other amplifiers 13 are presently used for amplifying signals both at the output sides, as well as at the input sides of the memory controller 2 and the memory 3 for all channels 6, 8, 9). The system clock signal 6 runs at a frequency of presently 1 GHz. Due to the design of the internal circuitry of the memory 3, a certain delay 14 occurs. The delay is incurred by various components and not by a single unit. Nevertheless, the effect of all components combined is indicated in Fig. 3 as an "effective delay component" 14.

Furthermore, the output of the PLL 12 (the system clock signal 6) serves as an input for the data PLL 15 that is generating the data clock signal 8. The data clock signal 8 runs at double speed as compared to the system clock 6 in the present embodiment. Once again, due to the internal setup of the memory 3 another delay (indicated as an "effective delay unit" 16) will occur. However, the delay 16 of the data clock signal 8 is usually different from the delay 14 of the system clock 6. (To be more exact: a - typically different - delay of the two clock signals 6, 8 also occurs on the memory controller side and/or on the transmission line itself; this, however, is not shown for illustrative purposes). Now, the "delayed" data clock signal 8 (having "passed delay unit 16") is halved by a frequency reducing device 17. Additionally, for being conformant with the JEDEC specification, a 180° flip unit 18 is provided as well. The thus processed data clock signal 8 and the "delayed" system clock signal 6 (having "passed delay unit 14") is processed by a suitable device, presently by a simple flip-flop device 19. The output of the flip-flop device 19 is the error detection signal 9, indicating whether the phasing relation is early or late. It is to be noted that the memory chip 3 is presently designed according to the standard design as "prescribed" by the JEDEC-standards.

This error detection signal will be fed into a shift register 20 (which will also get information from the "undelayed" system clock signal 6) and consecutively handed over to a comparator 21. The comparator 21 continuously sends an increment signal 22 to the unit delay phase incrementer 23. The unit delay phase incrementer 23 increments "step by step" the output signal of the data PLL 15 towards a "late direction" 10 (see Fig. 2a). However, when a changeover (in the "correct" direction) of the error detection signal 9 occurs, this will be noted by the comparator 21 and henceforth no increment signal 22 is sent anymore to the unit delay phase incrementer 23. Therefore, the delay of the data clock signal 8 is fixed with respect to the system clock signal 6 at a suitable position (although it is very slightly delayed, which is, however, no problem if appropriately done).

Furthermore, the comparator 21 sends a "stop training" signal (not indicated in Fig. 3), so both the memory controller 2 and the memory 3 know that the training phase has stopped and "real work" can commence (or another training cycle, in particular a training cycle of a different kind may commence).

The big advantage of the presently proposed method is that all components, in particular the shift register 20, the comparator 21 and the unit delay phase incrementer 23 can be designed as digital devices. Therefore, presently still necessary analog devices which are very power consuming (and usually need a lot of space) can be avoided. Therefore, the overall system 1 (in particular the memory controller 2) can be designed in an improved way.

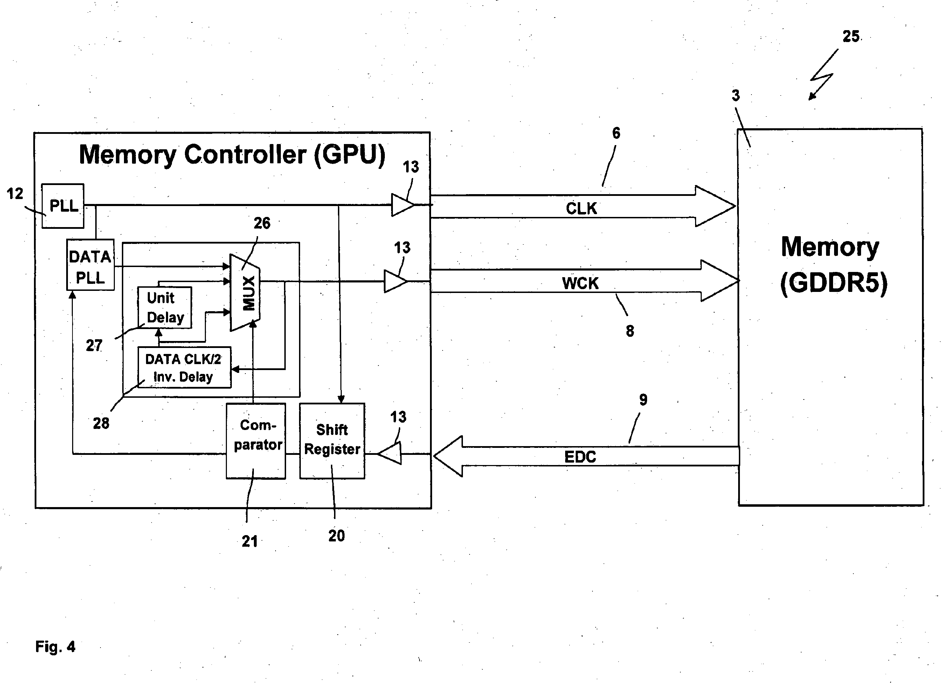

In Fig. 4, a variation of the GDDR5-system that is shown in Fig. 3 (24) is shown (indicated by reference numeral 25). For simplicity, the design of the memory 3 is not further illustrated (in particular, it usually has the same design as shown in Fig. 3).

Similar to the embodiment of Fig. 3, a system clock signal 6 is generated by a PLL circuit 12, while the data clock signal 8 is generated by a data PLL circuit 15. Furthermore, the "initial" processing of the error detection signal 9 is done by a shift register 20 and a comparator 21.

However, the "incrementation" of the phase delay of the data clock channel 8 is done differently. The increment signal 22 of the comparator 21 is sent to a multiplexer 26. The multiplexer changes between three different sources, namely between the output of the data PLL 15, a unit delay unit 27 and a data clock signal processing device 28 that inverts and delays the output of the multiplexer 26 by a half period of the data clock signal 8 while the period of the data clock signal 8 is maintained during training phases. Additionally, the output of the data clock signal processing device 28 is an input for the unit delay unit 27. The multiplexer 26 is commanded by the output of the comparator 21 additionally, the comparator 21 feeds the data PLL 15. The "net effect" of the presently depicted system is a phase shift towards one direction until a changeover of the error detection signal 9 is detected (similar to the previously described embodiment).

Once again, all devices can be designed as digital devices with the afore described advantages.

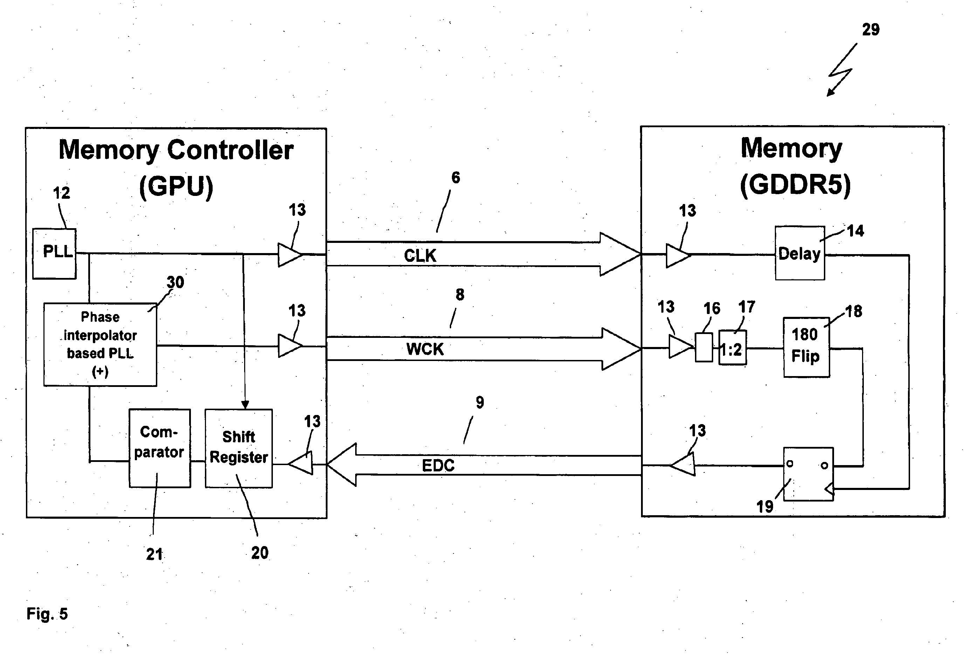

In Fig. 5, yet another example of a possible embodiment of a GDDR5-system 29 is shown. The memory 3 and the channels 6, 8, 9 are similar to the previously described embodiments.

Also, a PLL unit 12, a shift register 20 and a comparator 21 are provided. This time, the comparator 21 feeds a phase interpolator based PLL 30 which cannot only be commanded with respect to the frequency, but also with respect to the phase. In the presently shown embodiment, a phase interpolator based PLL 30 is used in which the phase delay can be incremented by an appropriate input signal (output of comparator 21) in a positive direction only (indicated by the "(+)" in Fig. 5). The functionality of the presently shown system 29 follows that of the previously described embodiments.

It has to be noted that the phase interpolator based PLL 30 can remove the need for additional unit delay increment devices, which further saves area and power (apart from the already present saving of energy and area by avoiding analog devices). Hence, the already described advantages will result. As another advantage, phase interpolator based PLLs typically inherit less jitter in comparison to standard PLLs, which further improves synchronisation between the system clock signal 6 and the data clock signal 8.

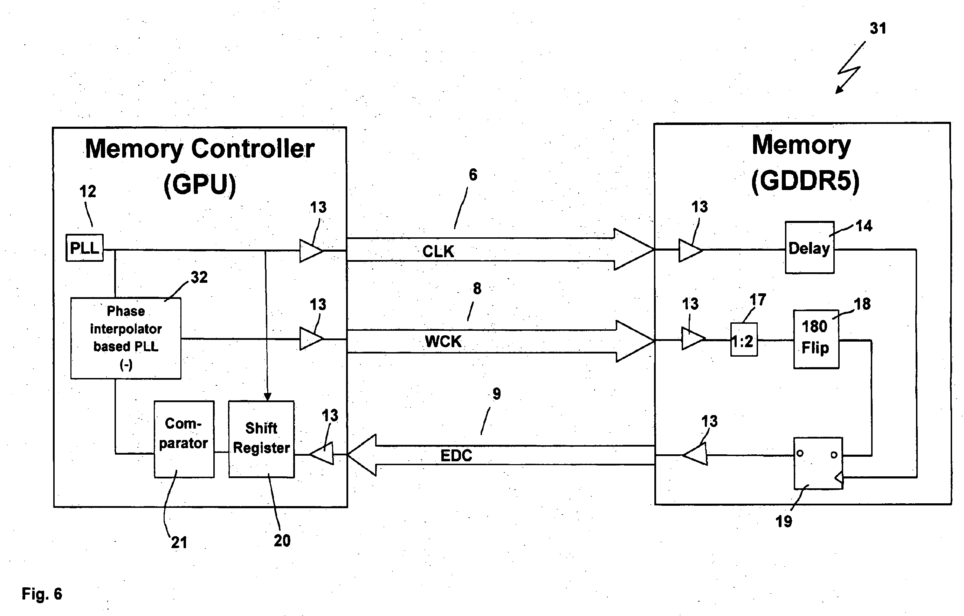

In Fig. 6 it is shown that the phase interpolator based PLL 32 can be also of a type were only a decrease (indicated by the "(-)" in Fig. 6) of the phase difference can be performed by an external signal (presently coming from the comparator 21). Nevertheless, even this GDDR5-system 31 has the same features and advantages (at least in analogy) as previously described.

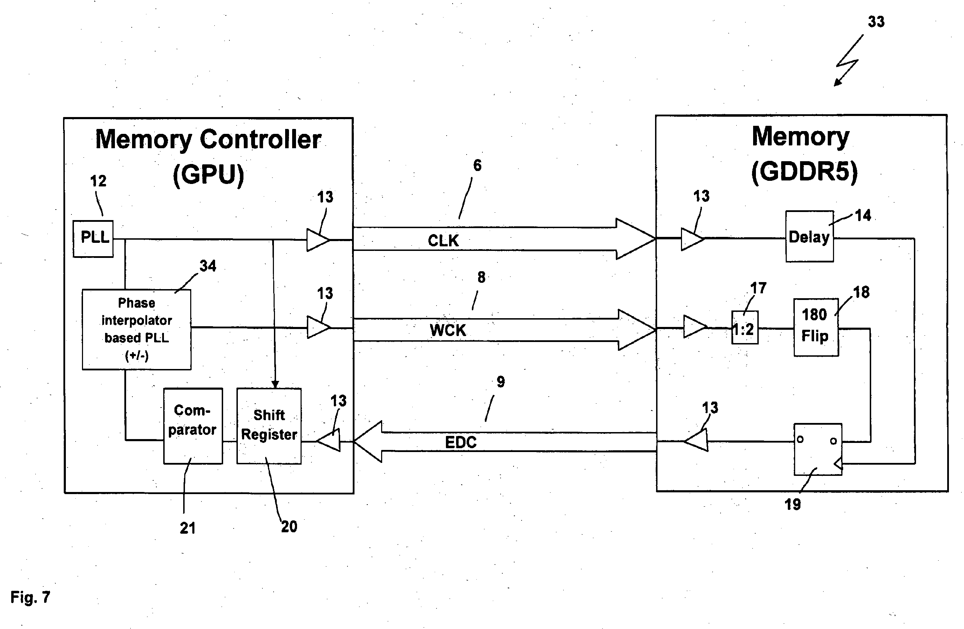

In Fig. 7 another GDDR5-system 33 is depicted. This time, a phase interpolator based PLL 34 of a type is used, where the phase change can be both incremented and decremented (indicated by the "(+/-)" in Fig. 7). For a working embodiment of the GDDR5-system 33 it is sufficient to "hardcode" either an increase or a decrease into the memory controller 2. However, it is also possible that in internal logic checks whether the previously performed training cycle resulted in both an "incorrect" and "correct" changeover or only a "correct" changeover of the error detection signal 9. In the first case, the training cycle will this time be performed in the other direction (which will typically result in a faster training cycle). In the latter case, the previous direction will be maintained (also usually resulting in a shorter training cycle).

In Fig. 8 a flowchart 35 of a possible embodiment of a method for controlling the phase delay between two different clocking signals 6, 8 (previously described examples) is shown. At a start-up step 36 the method will start. This can be done by sending out a "start training cycle" signal (step 37). Now, both the memory controller 2 and the memory 3 (and presumably other devices as well) know that no "real work" is done, but a training cycle is performed.

In the next step, the phase delay between the two respective clocking signals 6, 8 is simply increased (step 38).

In the next step 39 it is checked, whether a changeover of the error detection signal 9 has occurred. If this is not the case, a loop 40 is closed, the phase difference is once again incremented and so on.

However, if a changeover has occurred, the phase relationship between the two clocking signals is now correct and the loop 40 is left. Now, a signal is outputted that the training cycle has ended (41). After this, other training cycles may start and/or "real work" of the device may commence.

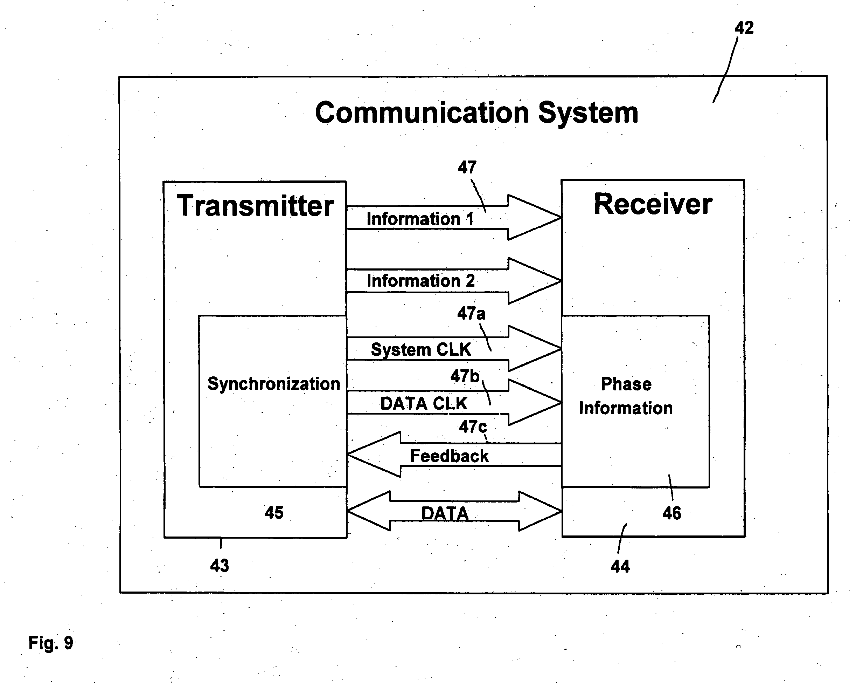

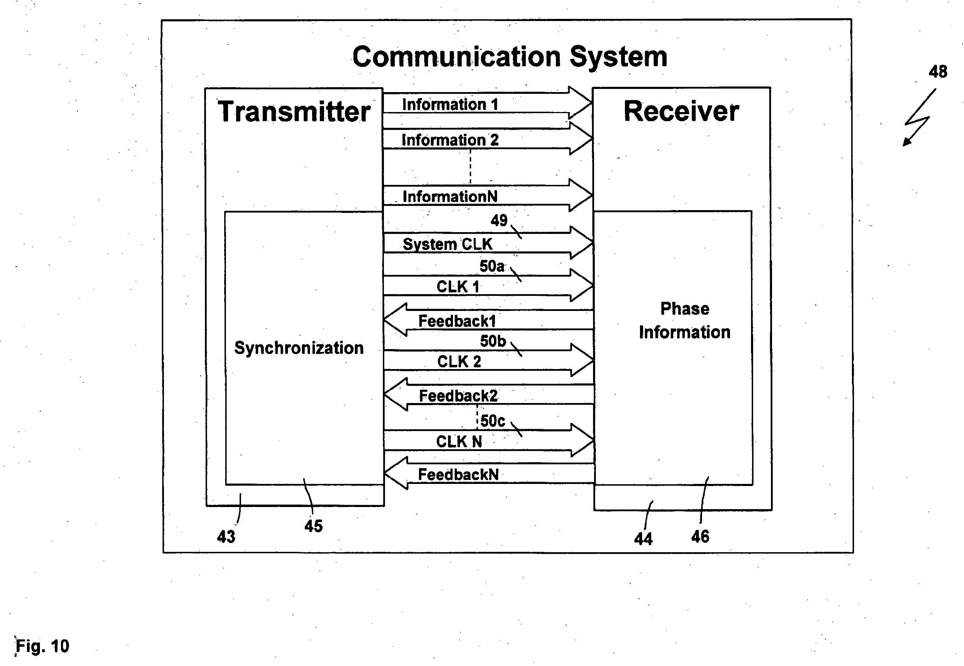

In Figs. 9 and 10 it is schematically indicated that the present invention is not limited to memory units. Instead, all varieties of communication systems may benefit from the present invention.

In Fig. 9, a first communication system 42, comprising a transmitter 43 and a receiver 44 is shown. The transmitter 43 has a synchronisation unit 45 and the receiver has a phase information generation unit 46, as indicated in Fig. 9. The transmitter 43 and the receiver 44 are connected with a variety of different communication channels 47 that can be both unidirectional and/or bidirectional. In particular, a system clock signal 47a, a data clock signal 47b and a feedback signal 47c are present. The training signal and/or the design of the presently shown communication system 42 can be designed similar to the previously shown description.

In Fig. 10 it is shown that the invention is not even restricted to systems with "only" two clocking signals. Instead, a communication system 48, comprising a system clock signal 49 and a plurality of additional clocking signals 50 can benefit as well from the present invention. Although presently not specifically mentioned, other unidirectional and/or bidirectional channels may be employed for the presently shown communication system 48 as well.

In particular with respect to the embodiments shown in Fig. 9 and Fig. 10 it should be noted that although the expressions "transmitter 43" and "receiver 44" are used, the feedback signal goes from the receiver 44 to the transmitter 43, therefore "reversing the prescribed direction". Therefore, it is also possible to talk about master and slave devices, which is obvious to a person, skilled in the art.

**Reference list**

| | | | |
|---|---|---|---|
| 1. | GDDR5-system | 28. | data clock signal processing unit |
| 2. | memory controller | | |
| 3. | GDDR5-memory | 29. | GDDR5-system |
| 4. | address channel | 30. | phase interpolator based PLL |
| 5. | command channel | | |
| 6. | system clock channel | 31. | GDDR5-system |
| 7. | data channel | 32. | phase interpolator based PLL |
| 8. | data clock channel | | |
| 9. | error detection signal channel | 33. | GDDR5-system |
| | | 34. | phase interpolator based PLL |
| 10. | phase shift direction | | |
| 11. | midpoint of rising flank | 35. | flowchart |
| 12. | PLL | 36. | start-up step |
| 13. | amplifier | 37. | start training cycle step |
| 14. | delay | 38. | increment phase delay step |
| 15. | data PLL | | |
| 16. | delay | 39. | check for changeover |
| 17. | frequency reducing device | 40. | loop |
| 18. | 180° flip unit | 41. | stop training cycle step |
| 19. | flip-flop device | 42. | communication system |
| 20. | shift register | 43. | transmitter |
| 21. | comparator | 44. | receiver |
| 22. | incrementing signal | 45. | synchronisation unit |
| 23. | unit delay phase incrementer | 46. | phase information unit |
| | | 47. | communication channel |
| 24. | GDDR5-system | 48. | communication system |
| 25. | GDDR5-system | 49. | system clock channel |
| 26. | multiplexer | 50. | additional clock channel |
| 27. | unit delay unit | 51. | phase difference |

## Claims

1. Method (35) for correcting a phase difference (51) in a time synchronised data transfer system (1, 24, 25, 29, 31, 33, 42, 48), comprising a main clocking signal (6, 47a, 49) and at least a data transmission signal (4, 5, 7, 8, 9, 47), wherein a phase difference (51) between said main clocking signal (6, 47a, 49) and said data transmission signal (4, 5, 7, 8, 9, 47) is detected and consecutively corrected, **characterised in that** said phase difference (51) is corrected by a phase shift in a single direction (10), wherein the amount of the phase shift correction is digitally incremented.

2. Method (35) according to claim 1, **characterised by** a plurality of data transmission signals (4, 5, 7, 8, 9, 47), preferably taken from the group comprising address signals (4), command signals (5), error detection signals (9, 47c), additional clocking signals (8, 47b, 50), writing data signals (7) and/or reading data signals (7).

3. Method (35) according to claim 1 or 2, in particular according to claim 2, **characterised in that** at least one data transmission signal (4, 5, 7, 8, 9, 47) is an additional clocking signal (6, 47a, 49), in particular a clocking signal (6, 47a, 49) with a different frequency as compared to the main clocking signal (4, 5, 7, 8, 9, 47), wherein preferably at least two clocking signals differ from each other by an integer factor.

4. Method (35) according to any of the preceding claims, in particular according to claim 2 or 3, **characterised in that** at least one data transmission signal (4, 5, 7, 8, 9, 47) is a dedicated phasing data line (9, 47c), indicating a phase difference (51) between the main clocking signal (6, 47a, 49) and the at least one data transmission signal (4, 5, 7, 8, 9, 47), in particular indicating whether the data transmission signal (4, 5, 7, 8, 9, 47) is late (Fig. 2b) or early (Fig. 2a) with respect to the main clocking signal (6, 47a, 49) and/or with respect to another data transmission signal (4, 5, 7, 8, 9, 47).

5. Method (35) according to any of the preceding claims, **characterised in that** the phase correction (10) is determined by a changeover of a phasing data signal (9), in particular by the changeover of a phasing data signal (9) on a dedicated phasing data line (9).

6. Method (35) according to any of the preceding claims, in particular according to claim 5, **characterised in that** an averaging method is used for determining the current phase shift (51), in particular for detecting a changeover of the phasing data signal (9).

7. Method (35) according to any of the preceding claims, **characterised in that** the measurement of the phase shift (51) is done at essentially the same frequency as the main clocking signal (6, 47a, 49) and/or as at least one data transmission signal (4, 5, 7, 8, 9, 47).

8. Method (35) according to any of the preceding claims, **characterised in that** the method is only performed during a training cycle (40).

9. Method (35) according to any of the preceding claims, in particular according to claim 8, **characterised in that** the phase difference correction (10), in particular a training cycle (40) can be repeated.

10. Method (35) according to any of the preceding claims, **characterised in that** the direction of the phase shift correction (10) is determined at the beginning of the phase correction (40).

11. Method (35) according to any of the preceding claims, **characterised in that** the amount of the phase shift correction (10) is digitally incremented at steps that are smaller than a maximum jitter offset that can be tolerated.

12. Method (35) according to any of the preceding claims, **characterised in that** it is used for synchronising a memory controller (2) and a memory unit (3), in particular of a DDR-memory type (1, 24, 25, 29, 31, 33).

13. Phase delaying unit (23, 26, 27, 28, 30, 32, 34), **characterised in that** the phase delaying unit (23, 26, 27, 28, 30, 32, 34) is designed and arranged in a way to perform at least at times a method (35) according to any of the preceding claims 1 to 12.

14. Phase delaying unit (23, 26, 27, 28, 30, 32, 34), according to claim 13, **characterised by** at least a shift register unit (20) and/or at least one comparator unit (21) and/or at least one delay phase increment unit (23, 27) and/or at least one phase interpolator based PLL (30, 32, 34).

15. Digital device (1, 24, 25, 29, 31, 33, 42, 48) comprising a synchronous data transfer system, in particular digital memory unit (1, 24, 25, 29, 31, 33), **characterised by** at least one phase delaying unit (23, 26, 27, 28, 30, 32, 34) according to any of claims 13 or 14 and/or **characterised in that** it is designed and arranged in a way to perform at least at times a method (35) according to any of claims 1 to 12.

## Patentansprüche

1. Methode (35) zur Korrektur einer Phasendifferenz (51) in einem zeitsynchronen Datenübertragungssystem (1, 24, 25, 29, 31, 33, 42, 48) mit einem Haupttaktsignal (6, 47a, 49) und wenigstens einem Datenübertragungssignal (4, 5, 7, 8, 9, 47), in dem eine Phasendifferenz (51) zwischen besagtem Taktsignal (6, 47a, 49) und besagtem Datenübertragungssignal (4, 5, 7, 8, 9, 47) zu erkennen und nachfolgend zu korrigieren ist, **gekennzeichnet dadurch, dass** besagte Phasendifferenz (51) durch eine einseitige Phasenverschiebung korrigiert wird (10), wobei der Korrekturbetrag der Phasendifferenz digital inkrementiert wird.

2. Methode (35) nach Anspruch 1, **gekennzeichnet durch** eine Vielzahl von Datenübertragungssignalen (4, 5, 7, 8, 9, 47), die vorzugsweise von der Gruppe aufgenommen werden und Adresssignale (4), Befehlssignale (5), Fehlererkennungssignale (9, 47c), zusätzliche Taktsignale (8, 47b, 50), Schreibdatensignale (7) und/oder Lesedatensignale (7) beinhalten.

3. Methode (35) nach Anspruch 1 oder 2, insbesondere nach Anspruch 2, **gekennzeichnet dadurch, dass** wenigstens ein Datenübertragungssignal (4, 5, 7, 8, 9, 47) ein zusätzliches Taktsignal ist (6, 47a, 49), insbesondere ein Taktsignal (6, 47a, 49) mit einer Frequenz, die sich vom Haupttaktsignal unterscheidet (4, 5, 7, 8, 9, 47), in dem sich vorzugsweise wenigstens zwei Taktsignale voneinander durch einen ganzzahligen Faktor unterscheiden.

4. Methode (35) nach einem der vorstehenden Ansprüche, insbesondere nach Anspruch 2 oder 3, **gekennzeichnet dadurch, dass** wenigstens ein Datenübertragungssignal (4, 5, 7, 8, 9, 47) eine Standdatenleitung mit Phaseneinstellung (9, 47c) ist, die eine Phasendifferenz (51) zwischen dem Haupttaktsignal (6, 47a, 49) und wenigstens einem Datenübertragungssignal angibt (4, 5, 7, 8, 9, 47), und insbesondere angibt, ob es sich im Hinblick auf das Haupttaktsignal (6, 47a, 49) und/oder im Hinblick auf ein anderes Datenübertragungssignal (4, 5, 7, 8, 9, 47) um ein spätes (Fig. 2b) oder frühes (Fig. 2a) Datenübertragungssignal (4, 5, 7, 8, 9, 47) handelt.

5. Methode (35) nach einem der vorstehenden Ansprüche, **gekennzeichnet dadurch, dass** die Phasenkorrektur (10) durch den Wechsel eines Datensignals mit Phaseneinstellung (9) bestimmt wird, insbesondere durch den Wechsel eines Datensignals mit Phaseneinstellung (9) auf einer Standdatenleitung mit Phaseneinstellung (9).

6. Methode (35) nach einem der vorstehenden Ansprüche, insbesondere nach Anspruch 5, **gekennzeichnet dadurch, dass** zur Bestimmung der aktuellen Phasenverschiebung (51) eine Mittelungsmethode angewandt wird, insbesondere zur Feststellung eines Wechsels des Datensignals mit Phaseneinstellung (9).

7. Methode (35) nach einem der vorstehenden Ansprüche, **gekennzeichnet dadurch, dass** die Messung der Phasenverschiebung (51) im Wesentlichen auf der gleichen Frequenz wie das Haupttaktsignal erfolgt (6, 47a, 49) und/oder auf wenigstens einem Datenübertragungssignal (4, 5, 7, 8, 9, 47).

8. Methode (35) nach einem der vorstehenden Ansprüche, **gekennzeichnet dadurch, dass** die Methode nur während eines Trainingszyklus (40) durchgeführt wird.

9. Methode (35) nach einem der vorstehenden Ansprüche, insbesondere nach Anspruch 8, **gekennzeichnet dadurch, dass** bei der Korrektur der Phasendifferenz (10) insbesondere ein Trainingszyklus (40) wiederholt werden kann.

10. Methode (35) nach einem der vorstehenden Ansprüche, **gekennzeichnet dadurch, dass** die Korrekturrichtung der Phasenverschiebung (10) zu Beginn der Phasenkorrektur (40) festgelegt wird.

11. Methode (35) nach einem der vorstehenden Ansprüche, **gekennzeichnet dadurch, dass** der Korrekturbetrag der Phasenverschiebung (10) digital in Schritten inkrementiert wird, die kleiner sind als der maximale, tolerierbare Jitter.

12. Methode (35) nach einem der vorstehenden Ansprüche, **gekennzeichnet dadurch, dass** sie zur Synchronisierung eines Speichercontroller (2) und einer Speichereinheit (3) dient, insbesondere eines DDR-Speichers Typ (1, 24, 25, 29, 31, 33).

13. Phasenverzögerungseinheit (23, 26, 27, 28, 30, 32, 34), **gekennzeichnet dadurch, dass** die Phasenverzögerungseinheit (23, 26, 27, 28, 30, 32, 34) so ausgelegt und angeordnet ist, dass wenigstens zeitweise eine Methode (35) nach einem der vorstehenden Ansprüche 1 bis 12 angewandt werden kann.

14. Phasenverzögerungseinheit (23, 26, 27, 28, 30, 32, 34) nach Anspruch 13, **gekennzeichnet durch** wenigstens eine Schieberegistereinheit (20) und/oder wenigstens eine Vergleichseinheit (21) und/oder wenigstens eine Inkrementiereinheit für die Phasenverzögerung (23, 27) und/oder wenigstens ein auf einem Phaseninterpolator basierendes PLL (30, 32, 34).

15. Digitales Gerät (1, 24, 25, 29, 31, 33, 42, 48), dass ein synchrones Datenübertragungssystem umfasst, insbesondere eine digitale Speichereinheit (1, 24, 25, 29, 31, 33), **gekennzeichnet durch** mindestens eine Phasenverzögerungseinheit (23, 26, 27, 28, 30, 32, 34) nach Anspruch 13 oder 14 und/oder **gekennzeichnet dadurch, dass** es so ausgelegt und angeordnet ist, um wenigstens zeitweise eine Methode (35) nach einem der Ansprüche 1 bis 12 anzuwenden.

## Revendications

1. Méthode (35) pour corriger une différence de phase (51) dans un système de transfert de données synchronisé en temps réel (1, 24, 25, 29, 31, 33, 42, 48) composé d'un signal d'horloge principal (6, 47a, 49) et d'au moins un signal de transmission de données (4, 5, 7, 8, 9, 47), dans laquelle une différence de phase (51) entre ledit signal d'horloge principal (6, 47a, 49) et ledit signal de transmission de données (4, 5, 7, 8, 9, 47) est détectée et consécutivement corrigée, **caractérisée en ce que** cette différence de phase (51) est corrigée par un décalage de phase dans une seule direction (10), et où l'ampleur de la correction par décalage de phase est numériquement incrémentée.

2. Méthode (35) selon la revendication 1, **caractérisée par** une multitude de signaux de transmission de données (4, 5, 7, 8, 9, 47), de préférence issus du groupe contenant des signaux d'adresse (4), des signaux de commande (5), des signaux de détection des erreurs (9, 47c), des signaux d'horloge supplémentaires (8, 47b, 50), des signaux d'écriture de données (7) et/ou des signaux de lecture de données (7).

3. Méthode (35) selon la revendication 1 ou 2, surtout selon la revendication 2, **caractérisée en ce qu'**au moins l'un des signaux de transmission de données (4, 5, 7, 8, 9, 47) est un signal d'horloge supplémentaire (6, 47a, 49), en particulier un signal d'horloge (6, 47a, 49) présentant une fréquence différente par rapport au signal d'horloge principal (4, 5, 7, 8, 9, 47), et dans laquelle de préférence deux signaux d'horloge au moins se distinguent l'un de l'autre par un facteur entier.

4. Méthode (35) selon l'une des revendications précédentes, surtout selon la revendication 2 ou 3, **caractérisée en ce qu'**au moins l'un des signaux de transmission de données (4, 5, 7, 8, 9, 47) est une ligne de données de mise en phase spécialisée (9, 47c), affichant une différence de phase (51) entre le signal d'horloge principal (6, 47a, 49) et au moins un signal de transmission de données (4, 5, 7, 8, 9, 47), indiquant notamment si le signal de transmission de données (4, 5, 7, 8, 9, 47) est en retard (Fig. 2b) ou en avance (Fig. 2a) par rapport au signal d'horloge principal (6, 47a, 49) et/ou à un autre signal de transmission de données (4, 5, 7, 8, 9, 47).

5. Méthode (35) selon l'une des revendications précédentes, **caractérisée en ce que** la correction de phase (10) est déterminée par un changement dans un signal de données de mise en phase (9), en particulier par le changement dans un signal de données de mise en phase (9) sur une ligne de données de mise en phase spécialisée (9).

6. Méthode (35) selon l'une des revendications précédentes, surtout selon la revendication 5, **caractérisée en ce qu'**une méthode d'établissement de la moyenne est utilisée pour déterminer le décalage de phase actuel (51), en particulier pour détecter un changement dans le signal de données de mise en phase (9).

7. Méthode (35) selon l'une des revendications précédentes, **caractérisée en ce que** la mesure du décalage de phase (51) est effectuée à une fréquence fondamentalement identique au signal d'horloge principal (6, 47a, 49) et/ou à au moins un signal de transmission de données (4, 5, 7, 8, 9, 47).

8. Méthode (35) selon l'une des revendications précédentes, **caractérisée en ce que** la méthode est uniquement appliquée au cours d'un cycle de formation (40).

9. Méthode (35) selon l'une des revendications précédentes, surtout selon la revendication 8, **caractérisée en ce que** la correction de la différence de phase (10), en particulier un cycle de formation (40), peut être reproduite.

10. Méthode (35) selon l'une des revendications précédentes, **caractérisée en ce que** la direction de la correction par décalage de phase (10) est déterminée au début de la correction de phase (40).

11. Méthode (35) selon l'une des revendications précédentes, **caractérisée en ce que** l'ampleur de la correction par décalage de phase (10) est numériquement incrémentée par étapes d'une amplitude inférieure à la compensation de gigue maximale pouvant être tolérée.

12. Méthode (35) selon l'une des revendications précédentes, **caractérisée en ce qu'**elle est employée pour synchroniser un contrôleur de mémoire (2) et une unité de mémoire (3), en particulier une mémoire de type DDR (1, 24, 25, 29, 31, 33).

13. Unité de retardement de phase (23, 26, 27, 28, 30, 32, 34), **caractérisée en ce que** l'unité de retardement de phase (23, 26, 27, 28, 30, 32, 34) est conçue et agencée de manière à exécuter au moins de temps à autre une méthode (35) selon l'une des revendications précédentes, de 1 à 12.

14. Unité de retardement de phase (23, 26, 27, 28, 30, 32, 34) selon la revendication 13, **caractérisée par** au moins une unité de registre à décalage (20) et/ou au moins une unité de comparaison (21) et/ou au moins une unité d'incrémentation de la phase de retardement (23, 27) et/ou au moins une PLL, ou boucle à phase asservie, basée sur un interpolateur de phase (30, 32, 34).

15. Dispositif numérique (1, 24, 25, 29, 31, 33, 42, 48) comprenant un système de transfert de données synchrone, en particulier une unité de mémoire numérique (1, 24, 25, 29, 31, 33), **caractérisé par** au moins une unité de retardement de phase (23, 26, 27, 28, 30, 32, 34) selon l'une des revendications précédentes 13 ou 14 et/ou **caractérisé en ce qu'**il est conçu et agencé de manière à exécuter au moins de temps à autre une méthode (35) selon l'une des revendications précédentes, de 1 à 12.
